# EUROPÄISCHE PATENTSCHRIFT

(11) **EP 1 955 009 B1**
(45) Veröffentlichungstag und Bekanntmachung des Hinweises auf die Patenterteilung: **06.01.2010**
(21) Anmeldenummer: 06818622.0
(22) Anmeldetag: 17.11.2006
(51) Int. Cl.: G01B 5/00

(54) **VORRICHTUNG ZUM BESTIMMEN EINER MESSGRÖSSE AN EINEM MESSOBJEKT**
DEVICE FOR DETERMINING A MEASUREMENT VARIABLE ON A MEASUREMENT OBJECT
DISPOSITIF DE DÉTERMINATION D'UNE GRANDEUR DE MESURE SUR UN OBJET À MESURER

(30) Priorität: 02.12.2005 DE 102005058504
(43) Veröffentlichungstag der Anmeldung: 13.08.2008
(73) Patentinhaber: Carl Zeiss Industrielle Messtechnik GmbH, 73447 Oberkochen (DE)
(72) Erfinder: LUTZ, Hariolf, 73441 Bopfingen (DE)
(74) Vertreter: Duhme, Torsten
(86) Internationale Anmeldenummer: PCT/EP2006/011044
(87) Internationale Veröffentlichungsnummer: WO 2007/062752

(56) Entgegenhaltungen:
- DE-A1- 1 798 191
- GB-A- 2 080 954

## Beschreibung

Die vorliegende Erfindung betrifft eine Vorrichtung gemäß dem Oberbegriff des Anspruchs 1 zum Bestimmen einer Messgröße an einem Messobjekt.

Eine Vorrichtung dieser Art ist aus DE 31 18 612 A1 bekannt.

Koordinatenmessgeräte werden im Allgemeinen verwendet, um Raumkoordinaten von definierten Messpunkten an einem Messobjekt zu bestimmen. Daraus lassen sich dann geometrische Abmessungen und/oder die Raumform des Messobjektes bestimmen. Ein typisches Einsatzgebiet ist die Vermessung von Werkstücken zur Qualitätskontrolle. Die Koordinatenmessgeräte besitzen einen Gestellaufbau mit einem Messkopf, der relativ zu dem Messobjekt verfahren werden kann. Der Messkopf wird in eine definierte Lage in Bezug auf den Messpunkt am Messobjekt gebracht und anschließend kann die Raumkoordinate des Messpunktes aus der Raumposition des Messkopfes bestimmt werden.

Die vorliegende Erfindung ist jedoch nicht auf Koordinatenmessgeräte im engeren Sinne beschränkt. Sie kann auch bei anderen Vorrichtungen angewendet werden, bei denen ein Mess- oder Arbeitskopf relativ zu einem Werkstück verfahren wird, beispielsweise also bei Werkzeugmaschinen. Die Erfindung wird im Folgenden am Beispiel von Koordinatenmessgeräten beschrieben, weil dies den bevorzugten Anwendungsfall aus Sicht der Anmelderin darstellt. Dies schließt jedoch Werkzeugmaschinen und andere Vorrichtungen mit einem relativ zu einer Grundplatte verfahrbaren Arbeitskopf nicht aus.

Es ist ein bekanntes Problem bei Koordinatenmessgeräten, dass sich der Werkstücktisch, auf dem ein Messobjekt für eine Messaufgabe platziert wird, unter der Last des Messobjekts verformen kann. Wenn sich diese Verformung auf den Gestellaufbau überträgt, werden die Messergebnisse in einer schwer zu korrigierenden Weise verfälscht. Zur Lösung dieses Problems gibt es verschiedene Vorschläge.

Die eingangs genannte DE 31 18 612 A1 schlägt einen Maschinenaufbau vor, bei dem die Grundplatte (dort als Grundgestell bezeichnet) über eine erste Vielzahl von Maschinenfüßen auf einem Fundament ruht. In der Grundplatte sind vertikale Hülsen vorgesehen, in denen eine Vielzahl von zweiten Maschinenfüßen angeordnet und auf dem Fundament abgestützt sind. Die zweiten Maschinenfüße sind in der Höhe verstellbar und tragen an ihrem oberen, freien Ende einen Werkstücktisch, auf dem das Messobjekt platziert werden kann. Da der Gestellaufbau mit dem verfahrbaren Messkopf auf der Grundplatte gelagert ist, wirken sich Deformationen des Werkstücktisches nicht auf den Gestellaufbau aus. Mit anderen Worten ist die Geradlinigkeit der Führungen des verfahrbaren Messkopfes unabhängig von dem Gewicht des Messobjekts. Die bekannte Vorrichtung ist jedoch relativ aufwendig im Aufbau und der Montage, da eine Vielzahl von Maschinenfüßen montiert und justiert werden müssen. Darüber hinaus besteht bei dieser bekannten Vorrichtung die Gefahr, dass sich die Grundplatte mit dem Gestellaufbau gegenüber dem Werkzeugtisch verschiebt, was zu Spannungen und Messungenauigkeiten führen kann.

In EP 0 604 380 A1 ist ein Koordinatenmessgerät vorgeschlagen, bei dem der Werkstücktisch über zumindest drei Füße auf der Grundplatte abgestützt ist. Die Grundplatte selbst ebenfalls zumindest drei Füße, wobei jeweils ein Fuß der Grundplatte unter einem Fuß des Werkstücktisches angeordnet ist.

US 4,594,791 offenbart ein Koordinatenmessgerät in Portalbauweise, bei dem der Werkstücktisch ebenfalls über Füße auf einer Grundplatte abgestützt ist. Das Portal soll den Werkstücktisch in einer ringförmigen Struktur umgreifen, um eine erhöhte Steifigkeit zu erreichen.

US 4,727,653 und US 4,495,703 offenbaren Koordinatenmessgeräte, bei denen die Führungen für den Gestellaufbau, der den Messkopf trägt, an demselben Gruridkörper angeordnet sind, auf dem auch das Messobjekt platziert wird. Dieser Grundkörper kann aus Stein hergestellt sein. Um eine ausreichende Steifigkeit zu erreichen, werden bei einem solchen Aufbau sehr schwere Grundkörper benötigt. Trotzdem besteht hier das Risiko einer Verformung unter dem Gewicht eines schweren Messobjekts.

Aus DE 1 798 191 A1 ist ein Koordinatenmessgerät mit einem in der Höhe verstellbaren Werkstücktisch bekannt. Zahnstangen dienen dazu, den Werkstücktisch in einer gewünschten Verstellposition zu blockieren. Diese Konstruktion dient dazu, Messobjekte mit erheblich voneinander abweichender Größe bei begrenzten Verfahrwegen des Messkopfes zu vermessen.

Vor diesem Hintergrund ist es eine Aufgabe der vorliegenden Erfindung, eine einfache und kostengünstige Alternative anzugeben, um den Einfluss des Werkstückgewichts auf die Positions- und Messgenauigkeit einer Vorrichtung der eingangsgenannten Art zu reduzieren.

Diese Aufgabe wird, gemäß Anspruch 1, bei einer Vorrichtung der eingangs genannten Art gelöst, indem die Grundplatte in Vertikalrichtung verstellbar an den Maschinenfüßen gelagert ist, wobei die Maschinenfüße in einer ersten Verstellposition nach oben aus der Grundplatte hinausragen, um den Werkstücktisch aufzunehmen, und wobei die Maschinenfüße in einer zweiten Verstellposition in der Grundplatte versenkt sind.

Im Gegensatz zu allen anderen Vorgehensweisen schlägt die vorliegende Erfindung eine in der Höhe verstellbare Grundplatte vor, die wahlweise so einstellbar ist, dass die Maschinenfüße oben aus der Grundplatte hinausragen. In dieser Verstellposition kann der Werkstücktisch sehr einfach auf den Maschinenfüßen platziert werden. Das Gewicht eines auf dem Werkstücktisch liegenden Messobjekts wird direkt über die Maschinenfüße aufgenommen. Die unter dem Werkstücktisch liegende Grundplatte ist vom Kraftfluss ausgeschlossen. Eine etwaige Verformung des Werkstücktisches wirkt sich daher auf die Grundplatte nicht aus. Damit sind die Führungen des Gestellaufbaus, der den Messkopf trägt, selbst dann von dem Geweicht des Messobjektes entkoppelt, wenn diese Führungen an oder auf der Grundplatte gelagert sind.

Andererseits ist aber auch die Grundplatte selbst an den Maschinenfüßen gelagert, so dass nur eine geringe Anzahl von Maschinenfüßen montiert und justiert werden müssen. Das neue Koordinatenmessgerät (allgemeiner: die neue Vorrichtung) ist daher einfach und kostengünstig zu realisieren.

Darüber hinaus ist die neue Vorrichtung sehr flexibel, da sie einen einfachen Austausch und die Verwendung von unterschiedlichen Werkstücktischen ermöglicht. In der zweiten Verstellposition steht zudem die gesamte Grundplatte zum Ablegen eines Messobjekts zur Verfügung, was eine besonders flexible Nutzung des neuen Koordinatenmessgerätes ermöglicht. Insbesondere können leichte Messobjekte unmittelbar auf der Grundplatte platziert werden, während Messobjekte mit höherem Gewicht auf einen Werkstücktisch aufgelegt werden, um die Führungen des Gestellaufbaus von dem Werkstückgewicht zu entkoppeln. Die neue Vorrichtung kann daher sehr einfach an unterschiedliche Messaufgaben adaptiert werden, was nicht nur dem Anwender eine höhere Flexibilität bietet, sondern auch dem Hersteller ein einheitliches Maschinenkonzept für eine Vielzahl von Maschinen ermöglicht.

Die oben genannte Aufgabe ist daher vollständig gelöst.

In einer Ausgestaltung der Erfindung beinhaltet die Vorrichtung eine Vielzahl von ersten Lagerelementen, mit denen die Grundplatte an den Maschinenfüßen gelagert ist, sowie eine Vielzahl von zweiten Lagerelementen, mit denen der Werkstücktisch in der ersten Verstellposition an den Maschinenfüßen festlegbar ist.

In dieser Ausgestaltung sind die Grundplatte und der Werkstücktisch mit voneinander getrennten Lagerungen an den Maschinenfüßen gelagert. Dies ermöglicht eine noch bessere Entkopplung der Grundplatte von potentiellen Verformungen des Werkstücktisches infolge eines schweren Messobjekts.

In einer weiteren Ausgestaltung beinhalten die ersten Lagerelemente eine mechanische Klemmung, die dazu ausgebildet ist, die Grundplatte in zumindest einer der Verstellpositionen zu arretieren. Vorzugsweise lässt sich die Grundplatte in jeder Verstellposition mit der mechanischen Klemmung arretieren.

Eine solche mechanische Klemmung lässt sich beispielsweise mit Spannbacken realisieren, die elektromotorisch, hydraulisch, pneumatisch oder von Hand geöffnet und geschlossen werden können. Alternativ hierzu ist es grundsätzlich auch denkbar, die Grundplatte allein über ihren Verstellmechanismus in der gewünschten Verstellposition zu halten. Die bevorzugte Ausgestaltung mit einer zusätzlichen mechanischen Klemmung trägt zu einer weiteren Reduzierung von Messfehlern bei.

In einer weiteren Ausgestaltung beinhalten die ersten Lagerelemente zumindest eine Mutter, die mit der Grundplatte verbunden ist, sowie zumindest eine Gewindestange, auf der die Mutter läuft.

Mit anderen Worten beinhalten die ersten Lagerelemente hiernach einen Gewindeantrieb, mit dessen Hilfe sich die Grundplatte in der Vertikalrichtung verstellen lässt. Diese Ausgestaltung ermöglicht eine sehr kostengünstige und robuste Realisierung, mit der sich die Grundplatte sehr genau positionieren lässt.

In einer weiteren Ausgestaltung bildet die zumindest eine Gewindestange einen der Maschinenfüße. In einem bevorzugten Ausführungsbeispiel sind alle Maschinenfüße als Gewindestange ausgebildet, und die Grundplatte ist über Stellmuttern an der äußeren Mantelfläche der Maschinenfüße gelagert.

In dieser Ausgestaltung sind der Verstellmechanismus zum Verstellen der Grundplatte und die Lagerung der Grundplatte in einem Gewindetrieb kombiniert. Diese Ausgestaltung ermöglicht daher eine besonders einfache, robuste und kostengünstige Realisierung der neuen Vorrichtung.

In einer weiteren Ausgestaltung beinhalten die zweiten Lagerelemente zumindest eine Kugelpfannenlagerung für den Werkstücktisch.

Eine solche Lagerung hält den Werkstücktisch spannungsfrei, auch wenn er sich unter dem Gewicht eines Messobjektes verformt. Die spannungsfreie Lagerung trägt zu einer optimalen Entkopplung des Werkstücktisches von den Führungen des Gestellaufbaus bei. Daher ist diese Ausgestaltung besonders vorteilhaft im Hinblick auf die Messgenauigkeit.

In einer weiteren Ausgestaltung weist zumindest ein Maschinenfuß ein oberes freies Ende auf, das kugelabschnittsförmig ausgebildet ist.

In dieser Ausgestaltung bildet der Maschinenfuß den Kugelkörper, der zusammen mit einer Pfanne am Werkstücktisch die Kugelpfannenlagerung realisiert. Alternativ hierzu könnte der Kugelkörper auch am Werkstücktisch ausgebildet sein und beispielsweise in eine Kegelpfanne eingreifen, die am oberen freien Ende des zumindest einen Maschinenfußes ausgebildet ist. Die bevorzugte Ausgestaltung ist demgegenüber flexibler, weil die Optimierung der Lagerung allein durch entsprechende Anpassung des Werkstücktisches erfolgen kann, der einfacher ausgetauscht werden kann als die Maschinenfüße bzw. die am Ende der Maschinenfüße angeordneten Lagerteile.

In einer weiteren Ausgestaltung weist zumindest ein Maschinenfuß ein unteres freies Ende auf, das Teil einer Kugelpfannenlagerung ist. Bevorzugt sind sämtliche Maschinenfüße über Kugelpfannenlagerungen auf einem Fundament abgestützt.

Diese Ausgestaltung ermöglicht eine optimal spannungsfreie Justierung der Grundplatte und sie trägt daher vorteilhaft zu einer weiteren Erhöhung der Messgenauigkeit bei.

In einer weiteren Ausgestaltung beinhaltet die Vorrichtung einen Gestellaufbau, an dem der Messkopf angeordnet ist, wobei der Gestellaufbau verfahrbar auf der Grundplatte gelagert ist.

In dieser Ausgestaltung tragen die Maschinenfüße praktisch die gesamte Vorrichtung einschließlich des Gestellaufbaus für den Messkopf. Die erfindungsgemäße Entkopplung von Grundplatte und Werkstücktisch wirkt sich in dieser Ausgestaltung besonders vorteilhaft aus. Darüber hinaus ermöglicht diese Ausgestaltung eine genaue Ausrichtung der Vorrichtung am Montageort mit geringem Aufwand.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den von der Ansprüchen definierten Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Koordinatenmessgerätes gemäß der vorliegenden Erfindung,
- Fig. 2: eine teilweise geschnittene Seitenansicht eines Koordinatenmessgerätes der in Fig. 1 gezeigten Art, und
- Fig. 3: das Koordinatenmessgerät aus Fig. 2 in einem Messbetrieb ohne Werk- stücktisch.

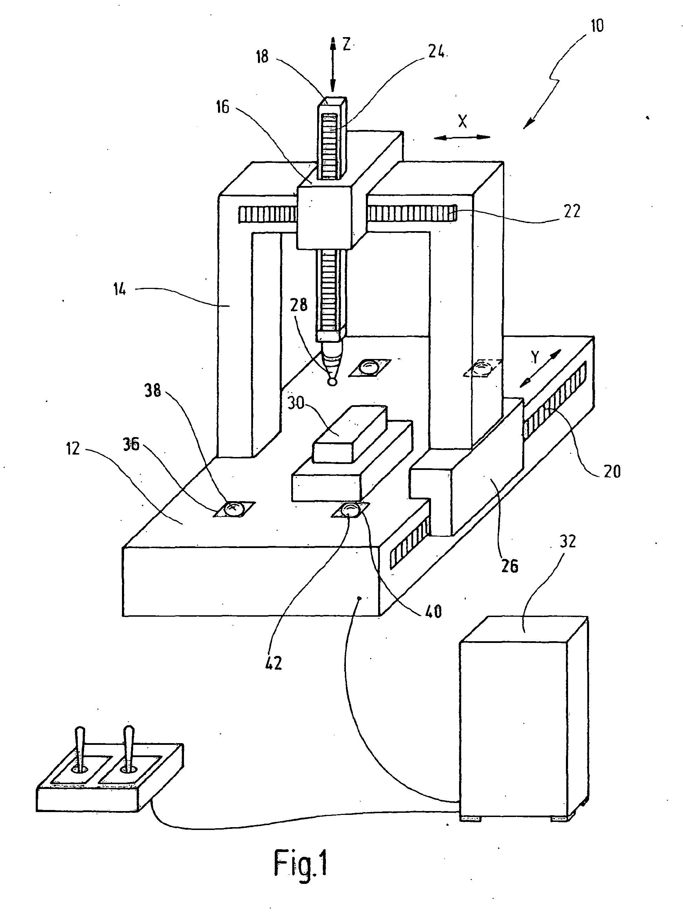

In Fig. 1 ist ein Koordinatenmessgerät, das nach der vorliegenden Erfindung ausgebildet ist, in seiner Gesamtheit mit der Bezugsziffer 10 bezeichnet. Es sei allerdings nochmals darauf hingewiesen, dass die Erfindung nicht nur bei Koordinatenmessgeräten, sondern auch bei anderen Vorrichtungen eingesetzt werden kann, bei denen ein Mess- oder Arbeitskopf relativ zu einer Grundplatte verfahrbar ist. Der Einfachheit halber wird die Erfindung an dem bevorzugten Beispiel eines Koordinatenmessgerätes erläutert.

Das Koordinatenmessgerät 10 ist hier in Portalbauweise dargestellt, was ein bevorzugtes Ausführungsbeispiel der Erfindung ist. Die Erfindung ist jedoch auch nicht auf diesen Gestellaufbau beschränkt und kann auch bei Vorrichtungen in Ständerbauweise und bei anderen Gestellaufbauten verwendet werden.

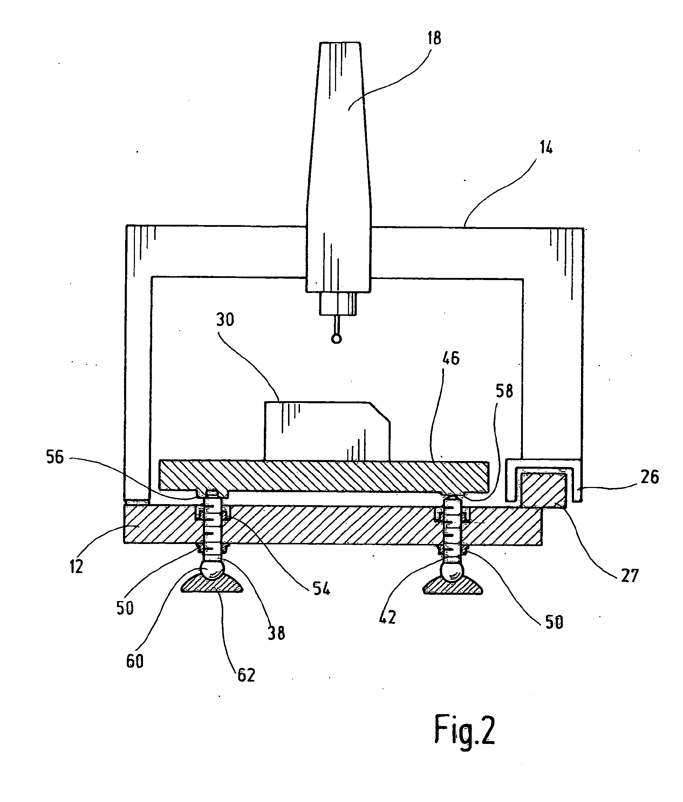

Das Koordinatenmessgerät 10 besitzt eine Grundplatte 12, auf der ein Portal 14 verfahrbar angeordnet ist. Die Bewegungsrichtung des Portals 14 wird üblicherweise als Y-Achse bezeichnet. An der Traverse des Portals 14 ist ein Schlitten 16 gelagert, der in X-Richtung verfahren werden kann. Der Schlitten 16 trägt eine Pinole 18, die in Z-Richtung verfahren werden kann. Mit den Bezugsziffern 20, 22 und 24 sind vereinfacht dargestellte Messskalen bezeichnet, mit deren Hilfe die Position eines Messkopfes 28 am unteren freien Ende der Pinole 18 bestimmt werden kann. Bei der Bezugsziffer 26 ist schematisch ein Antrieb dargestellt, der auf einer Führung 27 (Fig. 2) gelagert ist, die in Y-Richtung verläuft.

Mit der Bezugsziffer 30 ist ein vereinfacht dargestelltes Messobjekt bezeichnet, dessen Raumkoordinaten und/oder geometrischen Abmessungen mit Hilfe des Koordinatenmessgerätes 10 bestimmt werden sollen. Dazu wird der Messkopf 28 in eine definierte Position in Bezug auf einen Messpunkt am Messobjekt 30 gebracht, und die Raumkoordinaten des Messpunktes werden mit Hilfe der Messskalen 20 bis 24 bestimmt. Typischerweise wird der Messpunkt am Messobjekt 30 mit Hilfe eines am Messkopf 28 angeordneten Taststiftes angetastet. Die Erfindung kann jedoch auch bei Koordinatenmessgeräten eingesetzt werden, bei denen ein Messpunkt am Messobjekt 30 berührungslos angefahren wird.

Mit der Bezugsziffer 32 ist eine Auswerte- und Steuereinheit bezeichnet, die sowohl die Bewegungen des Koordinatenmessgerätes 10 steuert als auch die Raumkoordinaten und/oder geometrischen Abmessungen des Messobjektes 30 bestimmt.

Mit der Bezugsziffer 36 ist eine erste Ausnehmung in der Grundplatte 12 bezeichnet, in der ein erster Maschinenfuß 38 angeordnet ist. Bei der Bezugsziffer 40 ist eine weitere Ausnehinung dargestellt, in der ein weiterer Maschinenfuß 42 angeordnet ist. Die Maschinenfüße 38, 42 sind mit der Grundplatte 12 in der nachfolgend erläuterten Weise verbunden.

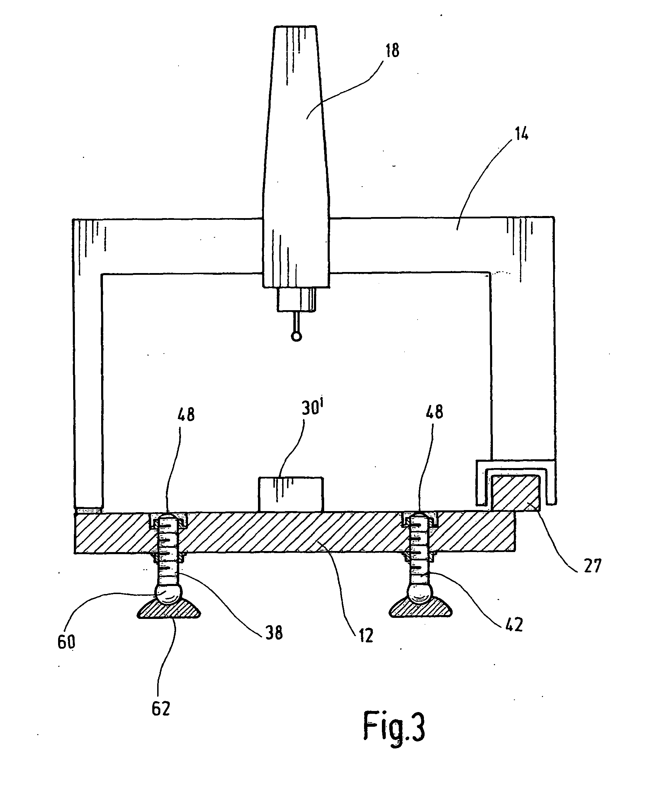

Die Figuren 2 und 3 zeigen den Aufbau des Koordinatenmessgerätes 10 in zwei verschiedenen Betriebsarten. Gleiche Bezugszeichen bezeichnen dabei dieselben Elemente wie zuvor.

In Fig. 2 ist das Messobjekt 30 ein relativ schweres Messobjekt. Es ist auf einem Werkstücktisch 46 gelagert, der seinerseits auf den oberen freien Enden 48 der Maschinenfüße 38, 40 ruht. In Fig. 3 ist ein relativ leichtes Messobjekt 30' direkt auf der Grundplatte 12 gelagert (ohne Werkstücktisch), wie dies auch in Fig. 1 dargestellt ist.

Für die Verwendung des Koordinatenmessgerätes 10 ohne Werkstücktisch 46 ist die Grundplatte 12 verstellbar an den Maschinenfüßen 38, 42 gelagert. Gemäß einem bevorzugten Ausführungsbeispiel sind die Maschinenfüße 38, 42 hier als Gewindestangen ausgebildet, die jeweils in einer Mutter 50 laufen. Die Muttern 50 sind an der Unterseite der Grundplatte 12 angeordnet. Über einen hier nicht dargestellten Antrieb können die Gewindestangen 38, 42 um ihre Längsachse gedreht werden, wodurch die Grundplatte 12 in eine erste, untere Verstellposition (Fig. 2) oder eine obere, zweite Verstellposition (Fig. 3) gebracht werden kann.

In der ersten, unteren Verstellposition ragen die oberen freien Enden 48 der Maschinenfüße 38, 40 über die Grundplatte 12 hinaus. Dementsprechend kann der Werkstücktisch 46 sehr leicht auf die oberen freien Enden der Maschinenfüße 38, 42 aufgesetzt werden. In der oberen, zweiten Verstellposition sind die freien Enden der Maschinenfüße 48 in den Ausnehmungen 36, 40 versenkt. Dies ermöglicht es, sehr große Werkstücke 30' zu vermessen, sofern diese leicht genug sind, so dass eine Verformung der Grundplatte 12 infolge des Gewichts des Messobjekts vernachlässigbar ist.

In dem dargestellten Ausführungsbeispiel ist in jeder Ausnehmung 36, 40 ein Satz Klemmbacken 54 angeordnet, mit denen die Grundplatte 12 in der gewählten Verstellposition an den Maschinenfüßen 38, 42 arretiert werden kann. Die Klemmbacken 54 können elektromotorisch, hydraulisch, pneumatisch oder auch von Hand betätigt sein.

Die oberen freien Enden 48 der Maschinenfüße 38, 42 sind hier annähernd halbkugelförmig ausgebildet. Sie bilden einen Lagerteil einer Kugelpfannenlagerung für den Werkstücktisch 46. In einem bevorzugten Ausführungsbeispiel besitzt der Werkstücktisch 46 an seiner Unterseite Lagerpfannen für die Aufnahme der freien Enden 48 der Maschinenfüße 38, 42, wobei eine erste Lagerpfanne 56 als Kugelpfanne oder Kegelpfanne ausgebildet ist, während eine zweite Lagerpfanne 58 eine weitgehend ebene Auflagefläche aufweist. Die Verwendung von unterschiedlichen Lagerpfannen 56, 58 ist vorteilhaft, um eine spannungsfreie Lagerung des Werkstücktisches 46 auf den Maschinenfüßen 38, 42 zu erreichen.

Die unteren freien Enden 60 der Maschinenfüße 38, 42 sind hier ebenfalls kugelförmig ausgebildet, und sie ruhen jeweils in einer entsprechenden Kugelpfanne 62, die Teil eines im Übrigen nicht näher dargestellten Fundaments ist. Alternativ zu dieser bevorzugten Ausgestaltung können die Maschinenfüße 38, 42 jedoch auch flach auf einem Fundament stehen oder in ein Fundament integriert sein.

Die Platzierung eines Messobjekts 30 auf dem Werkstücktisch 46 führt bei dem Koordinatenmessgerät 10 dazu, dass die Führung 27 zusammen mit dem restlichen Gestellaufbau 14, 16, 18 von dem Messobjekt 30 entkoppelt ist. Eine Verformung des Werkstücktisches 46 infolge des Gewichts des Messobjekts 30 hat keinen Einfluss auf den Gestellaufbau, insbesondere wenn der Werkstücktisch 46 spannungsfrei auf den Maschinenfüßen 38, 42 gelagert ist, wie dies in Fig. 2 dargestellt ist. Andererseits kann das Koordinatenmessgerät 10 jedoch ohne Werkstücktisch 46 verwendet werden, wie dies in Fig. 3 dargestellt ist.

## Patentansprüche

1. Vorrichtung zum Bestimmen einer Messgröße an einem Messobjekt (30), insbesondere Koordinatenmessgerät, mit einer Grundplatte (12), die an einer Vielzahl von Maschinenfüßen (38, 42) gelagert ist und worüber ein Werkstücktisch (46) plazierbar ist, um ein Werkstück (30) aufzunehmen, und mit einem Kopf (28), der relativ zu der Grundplatte (12) verfahrbar ist, **dadurch gekennzeichnet, dass** die Grundplatte (12) in Vertikalrichtung verstellbar an den Maschinenfüßen (38, 42) gelagert ist, wobei die Maschinenfüße (38, 42) in einer ersten Verstellposition nach oben aus der Grundplatte (12) hinausragen, um den Werkstücktisch (46) aufzunehmen, und wobei die Maschinenfüße (38, 42) in einer zweiten Verstellposition in der Grundplatte (12) versenkt sind.

2. Vorrichtung nach Anspruch 1, **gekennzeichnet durch** eine Vielzahl von ersten Lagerelementen (50, 54), mit denen die Grundplatte (12) an den Maschinenfüßen (38, 42) gelagert ist, sowie eine Vielzahl von zweiten Lagerelementen (48, 56, 58), mit denen der Werkstücktisch (46) in der ersten Verstellposition an den Maschinenfüßen (38, 42) festlegbar ist.

3. Vorrichtung nach Anspruch 2, **dadurch gekennzeichnet, dass** die ersten Lagerelemente eine mechanische Klemmung (54) beinhalten, die dazu ausgebildet ist, die Grundplatte (12) in zumindest einer der Verstellpositionen zu arretieren.

4. Vorrichtung nach Anspruch 2 oder 3, **dadurch gekennzeichnet, dass** die ersten Lagerelemente zumindest eine Mutter (50) beinhalten, die an der Grundplatte (12) befestigt ist, sowie zumindest eine Gewindestange, auf der die Mutter (50) läuft.

5. Vorrichtung nach Anspruch 4, **dadurch gekennzeichnet, dass** die zumindest eine Gewindestange einen der Maschinenfüße (38, 42) bildet.

6. Vorrichtung nach einem der Ansprüche 2 bis 5, **dadurch gekennzeichnet, dass** die zweiten Lagerelemente zumindest eine Kugelpfannenlagerung (56, 58) für den Werkstücktisch (46) beinhalten.

7. Vorrichtung nach Anspruch 6, **dadurch gekennzeichnet, dass** zumindest ein Maschinenfuß (38, 42) ein oberes freies Ende (48) aufweist, das kugelabschnittsförmig ausgebildet ist.

8. Vorrichtung nach einem der Ansprüche 1 bis 7, **dadurch gekennzeichnet, dass** zumindest ein Maschinenfuß (38, 42) ein unteres Ende (60) aufweist, das Teil einer Kugelpfannenlagerung ist.

9. Vorrichtung nach einem der Ansprüche 1 bis 8, **gekennzeichnet durch** einen Gestellaufbau (14, 16, 18), an dem der Messkopf (28) angeordnet ist, wobei der Gestellaufbau (14, 16, 18) verfahrbar auf der Grundplatte (12) gelagert ist.

## Claims

1. A device for determining a measureable variable on a measurement object (30), in particular a coordinate measuring machine, comprising a baseplate (12) mounted on a plurality of machine feet (38, 42) and over which a workpiece table (46) can be placed, in order to support a workpiece (30), and comprising a head (28) which can be moved relative to the baseplate (12), **characterized in that** the baseplate (12) is mounted on the machine feet (38, 42) such that it can be adjusted in a vertical direction, the machine feet (38, 42) projecting upward from the baseplate (12) in a first adjusting position in order to support the workpiece table (46), and the machine feet (38, 42) being recessed in the baseplate (12) in a second adjusting position.

2. The device of claim 1, **characterized by** a plurality of first support elements (50, 54) for mounting the baseplate (12) on the machine feet (38, 42), and a plurality of second support elements (48, 56, 58) for mounting the workpiece table (46) on the machine feet (38, 42) in the first adjusting position.

3. The device of claim 2, **characterized in that** the first support elements include a mechanical clamping means (54) designed to lock the baseplate (12) in at least one of the adjusting positions.

4. The device of claim 2 or 3, **characterized in that** the first support elements include at least one nut (50) that is fastened on the baseplate (12), and at least one threaded rod on which the nut (50) runs.

5. The device of claim 4, **characterized in that** the at least one threaded rod forms one of the machine feet (38, 42).

6. The device of one of claims 2 to 5, **characterized in that** the second support elements include at least one ball socket bearing (56, 58) for the workpiece table (46).

7. The device of claim 6, **characterized in that** at least one machine foot (38, 42) has an upper free end (48) that is designed in the shape of a spherical segment.

8. The device of one of claims 1 to 7, **characterized in that** at least one machine foot (38, 42) has a lower end (60) that is part of a ball socket bearing.

9. The device of one of claims 1 to 8, **characterized by** a frame structure (14, 16, 18) on which the head (28) is arranged, with the frame structure (14, 16, 18) being mounted such that it can be moved on the baseplate (12).

## Revendications

1. Dispositif de détermination d'une grandeur de mesure sur un objet à mesurer (30), en particulier appareil de mesure de coordonnées, avec une plaque de base (12) qui est logée au niveau d'une pluralité de pieds de machine (38, 42) et au-dessus de laquelle une table porte-pièce (46) peut être placée pour recevoir une pièce (30), et avec une tête (28) qui peut être déplacée par rapport à la plaque de base (12), **caractérisé en ce que** la plaque de base (12) est logée de manière mobile dans le sens vertical au niveau des pieds de machine (38, 42), les pieds de machine (38, 42) dépassant de la plaque de base (12) vers le haut dans une première position de réglage pour recevoir la table porte-pièce (46) et les pieds de machine (38, 42) étant noyés dans la plaque de base (12) dans une deuxième position de réglage.

2. Dispositif selon la revendication 1, **caractérisé par** une pluralité de premiers éléments formant palier (50, 54) avec lesquels la plaque de base (12) est logée au niveau des pieds de machine (38, 42), ainsi qu'une pluralité de deuxièmes éléments formant palier (46, 56, 58), avec lesquels la table porte-pièce (46) peut être fixée dans la première position de réglage au niveau des pieds de machine (38, 42).

3. Dispositif selon la revendication 2, **caractérisé en ce que** les premiers éléments formant palier comportent un élément de serrage mécanique (54), qui est conçu pour bloquer la plaque de base (12) dans au moins une des positions de réglage.

4. Dispositif selon la revendication 2 ou 3, **caractérisé en ce que** les premiers éléments formant palier comportent au moins un écrou (50), qui est fixé à la plaque de base (12), ainsi qu'au moins une tige filetée sur laquelle se déplace l'écrou (50).

5. Dispositif selon la revendication 4, **caractérisé en ce que** l'au moins une tige filetée forme un des pieds de machine (38, 42).

6. Dispositif selon l'une quelconque des revendications 2 à 5, **caractérisé en ce que** les deuxièmes éléments formant palier comportent au moins un palier à coussinet sphérique (56, 58) pour la table porte-pièce (46).

7. Dispositif selon la revendication 6, **caractérisé en ce qu'**au moins un pied de machine (38, 42) présente une extrémité libre supérieure (48) qui est réalisée sous forme de segment sphérique.

8. Dispositif selon l'une quelconque des revendications 1 à 7, **caractérisé en ce qu'**au moins un pied de machine (38, 42) présente une extrémité inférieure (60), qui fait partie d'un palier à coussinet sphérique.

9. Dispositif selon l'une quelconque des revendications 1 à 8, **caractérisé par** un bâti (14, 16, 18), au niveau duquel la tête de mesure (28) est disposée, le bâti (14, 16, 18) étant logé de manière mobile sur la plaque de base (12).
